# EUROPÄISCHE PATENTSCHRIFT

(11) **EP 3 442 822 B1**
(45) Veröffentlichungstag und Bekanntmachung des Hinweises auf die Patenterteilung: **04.11.2020**
(21) Anmeldenummer: 17700127.8
(22) Anmeldetag: 06.01.2017
(51) Int. Cl.: H02H 3/06

(54) **LADESTATION UND VERFAHREN ZUM BETREIBEN EINER LADESTATION**
CHARGING STATION AND ITS CORRESPONDING METHOD
STATION DE RECHARGE ET PROCEDE CORRESPONDANT

(30) Priorität: 12.04.2016 DE 102016106700
(43) Veröffentlichungstag der Anmeldung: 20.02.2019
(73) Patentinhaber: innogy SE, 45128 Essen (DE)
(72) Erfinder: SKRBIC, Srdan, 44265 Dortmund (DE); WAFFNER, Jürgen, 45307 Essen (DE)
(74) Vertreter: Cohausz & Florack
(86) Internationale Anmeldenummer: PCT/EP2017/050242
(87) Internationale Veröffentlichungsnummer: WO 2017/178122

(56) Entgegenhaltungen:
- EP-A1- 2 767 430
- EP-A1- 2 847 023
- EP-A1- 2 847 023
- EP-A2- 2 505 415
- EP-A2- 2 505 415
- DE-A1-102009 034 887
- DE-A1-102009 034 887
- DE-A1-102010 043 291
- DE-A1-102010 043 291
- DE-A1-102011 010 774
- DE-A1-102012 103 208
- DE-A1-102012 103 208
- DE-U1-202011 004 515
- DE-U1-202011 004 515
- US-A1- 2012 286 729
- US-A1- 2013 271 075
- US-A1- 2013 271 075
- US-A1- 2014 211 345

## Beschreibung

Der Gegenstand betrifft ein Verfahren zum Betreiben einer Ladestation für Elektrofahrzeuge sowie eine solche Ladestation.

Mit der Verbreitung von elektrischen Ladestationen für Elektrofahrzeuge nimmt das Interesse der Betreiber an solchen Ladestationen zu, diese möglichst kosteneffizient und ausfallsicher betreiben zu können. Durch die dezentrale Verteilung der Ladestationen ist es notwendig, die Anzahl an manuellen Wartungen und Eingriffen möglichst gering zu halten. Im Gegensatz zu herkömmlichen Zapfanlagen für Flüssigtreibstoffen, die unabhängig von der Funktionalität der zu betankenden Fahrzeuge den Treibstoff zur Verfügung stellen, kommt es im Bereich der elektrischen Ladestation jedoch zu einer galvanischen Kopplung zwischen Fahrzeug und Ladestation.

Diese galvanische Kopplung zwischen Fahrzeug und Ladestation ist insofern problematisch, als dass elektrische Fehlfunktionen innerhalb des an die Ladestation gekoppelten Fahrzeugs unmittelbar auf die Ladestation rückwirken und gegebenenfalls auch dort zu Fehlfunktionen führen. Ein ganz prägnantes Beispiel hierfür ist zum Beispiel, dass durch einen defekten Laderegler in dem Elektrofahrzeug eine maximal zulässige Stromstärke innerhalb der Ladestation überschritten wird. Ein weiteres Beispiel kann eine fehlerhafte Isolation der elektrischen Phasen zueinander innerhalb des Elektrofahrzeugs sein. Hierdurch verursachte, wenn auch geringe Fehlströme können zum Auslösen von Fehlerstromsicherungen führen.

Sobald eine Sicherung innerhalb der Ladestation ausgelöst wurde, kann die Ladestation nicht mehr für den aktuellen als auch für weitere Ladevorgänge genutzt werden. Heutzutage ist es notwendig, dass ein Servicetechniker die Ladestation aufsucht und die Sicherung manuell wieder einschaltet.

Es ist daher die gegenständliche Aufgabe, die Verfügbarkeit von Ladestationen zu erhöhen.

### Stand der Technik:

EP2505415

DE102011010774

Diese Aufgabe wird durch ein Verfahren nach Anspruch 1 sowie eine Vorrichtung nach Anspruch 12 gelöst.

Gegenständlich ist erkannt worden, dass ein Auslösen einer Sicherung innerhalb einer Ladestation auch durch eine Fehlfunktion innerhalb des an die Ladestation angeschlossenen Fahrzeugs verursacht werden kann. Ferner ist erkannt worden, dass in diesen Fällen ein manuelles Rückstellen der Sicherung entbehrlich sein kann. Insbesondere haben die Erfinder erkannt, dass nachdem das Fahrzeug, welches die Auslösung der Sicherung verursacht hat, von der Ladestation getrennt wurde, die Ladestation unter normalen Umständen weiter betrieben werden könnte. Problematisch ist jedoch nur, dass die einmal ausgelöste Sicherung herkömmlicherweise manuell zurückgestellt werden muss.

Andererseits ist ein automatisches Rückstellen der Sicherung aus sicherheitstechnischen Gründen nicht ohne weiteres möglich. Für den Fall, dass ein Fehler in der Ladestation aufgetreten ist, ist ein autonomes Rückstellen der Sicherung unerwünscht. Aus diesem Grunde haben die Erfinder erkannt, dass eine Erkennung des Zustands der Ladestation insbesondere des Kontaktzustands der Ladestation mit dem Ladekabel während des Auslösens der Sicherung ein sicheres autonomes Rückstellen der Sicherung ermöglicht. Hierzu wird gegenständlich vorgeschlagen, dass zunächst ein Schaltzustand zumindest einer zwischen einem Netzanschluss und einem Ladekabelanschluss angeordneten Sicherung überwacht wird.

Der Netzanschluss ist in der Regel ein Ortsnetzanschluss oder ein Mittelspannungsanschluss. Über geeignete Anschlüsse ist der Netzanschluss in die Ladestation elektrisch isoliert geführt und wird dort über zumindest eine Sicherung abgesichert. Hierbei wird insbesondere jede einzelne Phase des Netzanschlusses über jeweils eine Sicherung abgesichert. Ausgangsseitig der Sicherungen werden die Phasen über eine Ladeelektronik und Messeinrichtungen hin zu dem elektrischen Steckkontakt für das Ladekabel geführt.

Sobald ein Ladekabel in die Ladestation eingesteckt ist und beispielsweise eine Bereitschaft zum Laden gegenüber der Ladestation signalisiert wurde, beginnt der Ladevorgang und der Ladestrom wird freigegeben. Es kann nun vorkommen, dass während eines Ladevorgangs eine Sicherung auslöst und die Verbindung zwischen dem Netzanschluss und dem Ladekabelanschluss elektrisch trennt. Eine solche Trennung kann anhand des Schaltzustands der Sicherung detektiert werden.

Das Trennen der Verbindung zwischen Netzanschluss und Ladekabelanschluss wird durch ein Öffnen der Sicherung bewirkt. Wird nun detektiert, dass das Öffnen der Sicherung während eines Anschlusses des Ladekabels an dem Ladekabelanschluss auftritt, kann gegenständlich nunmehr die Sicherung automatisch und autonom wieder geschlossen werden. Insbesondere erfolgt das autonome Schließen der Sicherung erst dann, wenn das Ladekabel von dem Ladekabelanschluss getrennt wurde. Hierzu wird der Kontaktzustand des Ladekabels an dem Ladekabelanschluss überwacht und festgestellt, ob das Ladekabel an den Ladekabelanschluss angeschlossen ist oder von diesem getrennt ist. Wird eine Trennung detektiert, d.h. wird das Ladekabel von dem Ladekabelanschluss abgezogen und wurde gleichzeitig festgestellt, dass zuvor, während dieses Anschlusses des Ladekabels an dem Ladekabelanschluss die Sicherung ausgelöst wurde, wird nun vorgeschlagen, dass diese Öffnung der Sicherung autonom rückgängig gemacht wird, in dem die Sicherung autonom geschlossen wird.

Die Erfinder haben erkannt, dass dieses autonome Schließen der Sicherung die elektrische Sicherheit der Ladestation nicht beeinträchtigt. Vielmehr ist es möglich, im Falle eines Fehlers innerhalb des Ladekabels oder des Elektrofahrzeugs, welches momentan lädt, den dadurch verursachten Ausfall der Ladestation automatisch rückgängig zu machen. Ist der Fehler während des Ladevorgangs innerhalb der Ladestation aufgetreten, so wird die Sicherung nachdem sie autonom geschlossen wurde, sollte dieser Fehler erneut auftreten, wieder öffnen. Da in einem solchen Fall gegebenenfalls kein Fahrzeug an der Ladestation angeschlossen ist, also der Kontaktzustand des Ladekabels auf "Trennung" erkannt wurde, erfolgt gegenständlich danach kein autonomes Schließen der Sicherung mehr und die Ladestation bleibt abgeschaltet. In einem solchen Fall kann ein Techniker den Fehler manuell beheben.

Der Kontaktzustand kann mechanisch oder elektrisch überwacht werden. Durch einen Näherungsschalter, einen Mikroschalter, einen optischen Detektor oder dergleichen, kann überwacht werden, ob das Ladekabel mechanisch an dem Ladekabelanschluss angeschlossen ist. Ein entsprechender Kontaktzustand kann ausgegeben werden. Eine elektrische Überwachung des Kontaktzustands des Ladekabels ist ebenfalls möglich. Hierbei kann beispielsweise das Pilotsignal an dem elektrischen Anschluss des Kabels überwacht werden. Ein Ladekabel hat herkömmlicherweise neben dem Nullleiter, den Phasenleitern und dem Erdungsleiter zumindest einen weiteren Signalleiter, der hinlänglich auch als Pilotleiter bezeichnet wird. Über ein Pilotsignal kann das Fahrzeug mit der Ladestation seine Bereitschaft zum Laden austauschen. Mit Hilfe des Pilotsignals kann überwacht werden, ob ein Ladekabel an dem Ladekabelanschluss angeschlossen ist. Ist kein Pilotsignal detektierbar, kann z.B. der Kontaktzustand auf "Trennung" gesetzt werden. Ist ein Pilotsignal detektierbar, kann z.B. der Kontaktzustand auf "Anschluss" gesetzt werden. Der Kontaktzustand kann durch setzen eines bits überwacht werden. Z.b. kann der Zustand "Anschluss" logisch als 1 und der Zustand "Trennung" logisch als 0 gespeichert werden.

Auch ist es möglich, dass der Kontaktzustand elektrisch über einen Widerstand des Kabels gemessen wird. In der Regel haben Ladekabel einen genormten Widerstand, so dass die Ladestation messen kann, ob ein zulässiges Ladekabel angeschlossen ist. Schlägt eine Messung des Widerstands fehl, so kann der Kontaktzustand ebenfalls auf "Trennung" gesetzt werden. Ist die Messung positiv, so kann der Kontaktzustand auf "Anschluss" gesetzt werden. Durch die elektrische und/oder mechanische Erfassung des Kontaktzustandes, kann eine sichere Erkennung des Ladekabels an dem Ladekabelanschluss erfolgen.

Mit Hilfe der Überwachung des Kontaktzustands ist es möglich, eine bedingte autonome Schließung der zumindest einen Sicherung zu ermöglichen. Ist der Fehler während eines Anschlusses des Ladekabels an dem Ladekabelanschluss aufgetreten und dabei die Sicherung geöffnet worden, so kann gegenständlich die Sicherung, nachdem das Ladekabel von dem Ladekabelanschluss abgezogen wurde, autonom geschlossen werden. In allen anderen Fällen, d.h. wenn die Sicherung auslöst, ohne dass das Ladekabel an den Ladekabelanschluss angeschlossen ist, der Kontaktzustand also auf "Trennung" erkannt wurde, erfolgt kein autonomes Schließen der Sicherung, da dann mit einer hohen Wahrscheinlichkeit der Fehler innerhalb der Ladestation aufgetreten ist.

Wie bereits erwähnt, kann eine Ladestation mehr als eine Sicherung aufweisen. Insbesondere sind alle drei Phasen der Ladestation einzeln abgesichert. Neben einem Lastschutzschalter kann zusätzlich ein Fehlerstromschutzschalter insbesondere pro Phase eingesetzt sein. Insofern umfasst die gegenständliche Sicherung zumindest vorzugsweise einen Lastschalter bzw. Lastschutzschalter und einen Fehlerstromschutzschalter.

Ein Auslösen der Sicherung kann auch temperaturbedingt erfolgen. Insbesondere kann bei einem zu hohem Ladestrom die Temperatur in der Sicherung ansteigen und schließlich zu einem Öffnen der Sicherung führen. Ein solches Auslösen der Sicherung aufgrund einer Temperaturüberschreitung kann zur Folge haben, dass das autonome Schließen entweder unterbunden wird oder erst nach einer bestimmten Zeit durchgeführt wird.

Aus diesem Grunde wird gemäß einem Ausführungsbeispiel vorgeschlagen, dass bei einem Überschreiten einer maximalen Temperatur das autonome Schließen unterbunden wird. Andererseits ist es auch möglich, dass eine bestimmte Zeit bis zu einem autonomen Schließen abgewartet wird. Dies kann beispielsweise dann sinnvoll sein, wenn aufgrund eines Fehlers die maximale Ladeleitung überschritten wurde und dadurch die Temperatur innerhalb der Ladestation ein Grenzwert überschritten hat. Soll nun ein neuer Ladevorgang mit einem anderen Ladekabel bzw. einem anderen Elektrofahrzeug durchgeführt werden, kann dieses in der Regel mit normaler Ladeleistung arbeiten. Da die Temperatur jedoch bereits überschritten wurde, führt die normale Ladeleistung des intakten Fahrzeugs dazu, dass die Temperatur innerhalb der Ladestation nicht schnell genug sinkt. Um dies zu verhindern, wird die Sicherung erst nach einer gewissen Zeit geschlossen, so dass ein anschließender Ladevorgang erst dann startet, wenn davon ausgegangen werden kann, dass die Temperatur innerhalb der Ladestation auf einen akzeptablen Wert, also unter einen Grenzwert gesunken ist.

Auch wird vorgeschlagen, dass eine Ladeleistung für einen Ladevorgang nach dem autonomen Schließen gegenüber einer Regelladeleistung reduziert wird. Insbesondere ist dies der Fall, wenn eine Temperatur einen Grenzwert überschritten hat. Das Reduzieren der Ladeleistung gegenüber einer Regelleistung kann beispielsweise dadurch erfolgen, dass die Ladestation dem Laderegler innerhalb des Fahrzeugs signalisiert, die Ladeleistung zu reduzieren. Durch die reduzierte Ladeleistung wird sichergestellt, dass die Temperatur innerhalb der Ladestation nicht weiter ansteigt oder sogar sie absinkt.

Gemäß einem Ausführungsbeispiel wird vorgeschlagen, dass die Sicherung unabhängig von einer Kommunikation mit einer räumlich entfernt angeordneten Zentrale autonom in der Ladestation geschlossen wird. Es ist erkannt worden, dass das autonome Schließen der Sicherung zu einer Erhöhung der Verfügbarkeit der Ladestationen auch dann führen kann, wenn keine Kommunikation zwischen einer einzelnen Ladestation und einer Zentrale möglich ist. Gerade dadurch, dass die Ladestation autonom die Sicherung schließen kann, kann die Ladestation ihre Verfügbarkeit erhöhen. Es ist keine Kontrolle bzw. Regelung durch eine Zentrale notwendig.

Das Schließen der Sicherung kann über einen motorischen Stellantrieb erfolgen. Insbesondere wird der motorische Stellantrieb dann aktiviert, wenn eine Öffnung der Sicherung detektiert wurde und ferner detektiert wurde, dass diese Öffnung während des Kontaktzustands "Anschluss" erfolgte und der Kontaktzustand in den Zustand "Trennung" übergegangen ist.

Gemäß einem Ausführungsbeispiel wird vorgeschlagen, dass der Netzanschluss mehrphasig ist. Durch den mehrphasigen Netzanschluss ist es möglich, das Elektrofahrzeug auf mehreren Phasen gleichzeitig zu laden, was jedoch abhängig von der Fähigkeit des Ladereglers innerhalb des Elektrofahrzeugs ist. Wird auf mehreren Phasen geladen, so kann es vorkommen, dass nur eine Sicherung auf einer Phase auslöst und öffnet. Es ist jedoch erkannt worden, dass das autonome Schließen stets auf allen Sicherungen durchgeführt wird, unabhängig davon, ob auch alle Sicherungen auch tatsächlich ausgelöst haben. Das bedeutet, dass wenn auch nur eine der mehreren Sicherungen ausgelöst hat und das Signal zum automatischen Schließen der Sicherung aufgrund der oben genannten Bedingungen erfolgt, alle Sicherungen autonom geschlossen werden. Insbesondere erfolgt das Schließen über einen mechanischen Stellantrieb, insbesondere ein motorischen Stellantrieb. Dieser Stellantrieb fährt über alle Sicherungen gleichermaßen, unabhängig davon, ob diese zuvor geöffnet oder geschlossen waren. Dies stellt sicher, dass nach einem automatischen Schließen der Sicherung alle Phasen für ein anschließendes Laden zur Verfügung stehen.

Gemäß einem Ausführungsbeispiel wird vorgeschlagen, dass nach einem autonomen Schließen der Sicherung deren Schaltzustand überwacht wird und dass bei einer Öffnung der Sicherung ohne einen detektierten Anschluss des Ladekabels an dem Ladekabelanschluss ein Störungssignal an eine räumlich entfernte Zentrale abgesetzt wird. Das Öffnen der Sicherung kann einerseits durch das an dem Ladekabelanschluss angeschlossene Ladekabel oder Elektrofahrzeug verursacht sein, andererseits durch einen elektrischen Fehler innerhalb der Ladestation. Ist ein Fehler innerhalb der Ladestation aufgetreten und erfolgt das autonome Schließen, nachdem das Ladekabel von dem Ladekabelanschluss getrennt wurde, so wird in der Regel, wenn der Fehler weiterhin besteht, die Sicherung erneut auslösen. Somit ist nach dem autonomen Schließen erneut eine Öffnung der Sicherung anzunehmen. In diesem Fall wird jedoch detektiert, dass der Kontaktzustand auf "Trennung" ist, also kein Ladekabel an dem Ladekabelanschluss angeschlossen ist. Diese interne Störung innerhalb der Ladestation muss nach wie vor manuell behoben werden. Um möglichst zeitnah eine Reparatur zu ermöglichen, wird gegenständlich vorgeschlagen, ein Störungssignal abzusetzen.

Gemäß einem Ausführungsbeispiel wird vorgeschlagen, dass ein Zeitraum zwischen einer detektierten Trennung des Ladekabels von dem Ladekabelanschluss und dem autonomen Schließen der Sicherung bestimmt wird. Insbesondere wird vorgeschlagen, dass der Zeitraum stetig länger wird, abhängig von der Anzahl der detektierten Öffnungen innerhalb eines Intervalls. Es kann vorkommen, dass ein defektes Ladekabel bzw. ein defektes Elektrofahrzeug an einer Ladestation angeschlossen wird. Der Defekt kann dazu führen, dass die Sicherung öffnet. Gegenständlich wird, nachdem das Ladekabel abgezogen wurde, die Sicherung autonom wieder geschlossen. Wenn der Nutzer dieses defekten Ladekabels oder des defekten Elektrofahrzeugs dann aber erneut einen Ladevorgang initiieren möchte, steckt er unmittelbar nach dem Abziehen des Ladekabels dieses wieder in die Ladestation. Die Sicherung würde dann wieder nach dem autonomen Schließen öffnen. Dieser Vorgang würde sich wiederholen, bis der Nutzer davon ablässt, sein Ladekabel an- und abzustecken. Um zu verhindern, dass ein ständiges Öffnen und Schließen der Sicherung erfolgt, wird überprüft, ob innerhalb eines bestimmten Intervalls nach dem Abziehen ein Ladekabel angesteckt wird. In der Regel wird, wenn ein gleicher Nutzer das Ladekabel abzieht und ansteckt, dieses Intervall kurz sein. Auf der anderen Seite wird, wenn ein neuer Nutzer an der Ladestation laden will, eine gewisse Zeit verstreichen, z.B. zumindest eine Minute.

Wird das erste Abziehen detektiert, so kann das Intervall beginnen. Erfolgt kurzzeitig, also innerhalb eines bestimmten Intervalls ein erneutes Anstecken, so wird die Anzahl der detektierten Öffnungen um eins erhöht, da die Sicherung aufgrund des Defektes im Ladekabel bzw. Elektrofahrzeugs erneut auslöst. Zieht der Nutzer das Ladekabel ab und steckt es wieder erneut an, wird die Anzahl der detektierten Öffnung um eins erhöht und der Zeitraum, bis die Sicherung schließt, kann inkrementiert werden.

Nach Ablauf dieses Zeitraums wird die Sicherung wieder schließen, wenn das Ladekabel von dem Ladekabelanschluss abgezogen wurde. Die Anzahl wird dann erneut um eins erhöht. Zieht der Nutzer das Kabel erneut ab und steckt es wieder an, ist aufgrund der Anzahl zwei der Zeitraum erneut länger und es dauert wiederum länger, bis die Sicherung autonom schließt. Dies führt dazu, dass der Nutzer gegebenenfalls davon ablässt, sein defektes Ladekabel bzw. sein defektes Fahrzeug erneut an die Ladestation anzustecken.

Um sicherzustellen, dass das Intervall nicht zu kurz ist, wird auch vorgeschlagen, dass nach jeder detektierten Öffnung innerhalb eines Intervalls dieses Intervall um ein Zeitraum verlängert wird, insbesondere um den zuvor bestimmten Zeitraum zwischen dem detektierten Abziehen und dem Schließen der Sicherung.

Gemäß einem Ausführungsbeispiel wird vorgeschlagen, dass eine Anzahl an detektierten Öffnungen innerhalb eines Intervalls bestimmt wird. Insbesondere kann das Intervall beginnen, wenn eine erste Öffnung detektiert wurde oder wenn ein erstes autonomes Schließen erfolgt ist. Die Anzahl der detektierten Öffnungen wird nach Ablauf dieses Intervalls zurückgesetzt, insbesondere auf null gesetzt. Wird eine maximale Anzahl an detektierten Öffnungen überschritten, kann das autonome Schließen unterbunden werden. Dies soll insbesondere Sabotageversuche unterbinden, in dem bewusst ein Öffnen der Sicherung herbeigeführt wird.

Ein weiterer Aspekt ist eine Ladestation nach Anspruch 12. Die Sicherung ist vorzugsweise dazu eingerichtet, einen elektrischen Fehler zumindest an dem Ladekabelanschluss zu detektieren. Ferner ist die Sicherung dazu eingerichtet, eine elektrische Verbindung zwischen dem Netzanschluss und dem Ladekabelanschluss zu schalten.

Nachfolgend wird der Gegenstand anhand einer Ausführungsbeispiele zeigenden Zeichnung näher erläutert. In der Zeichnung zeigen:
- Fig. 1: eine gegenständliche Ladestation;
- Fig. 2: ein Ablaufdiagramm eines gegenständlichen Verfahrens.

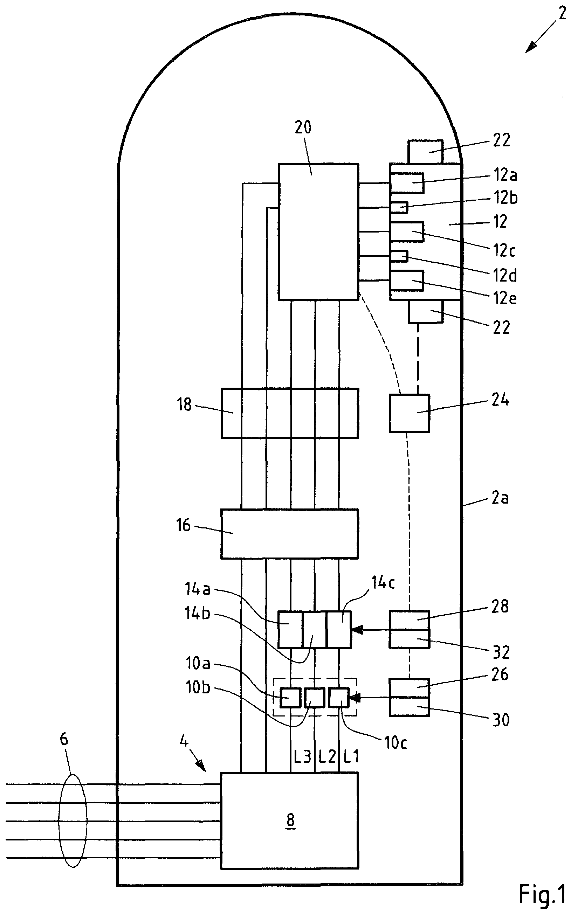

Fig. 1 zeigt eine Ladestation 2 mit einem Gehäuse 2a. Die Ladestation 2 ist über einen Netzanschluss mit einem Ortsnetz 6 oder einem Mittelspannungsnetz verbunden. Das Ortsnetz 6, insbesondere ein 0,4 kV Netz, ist dreiphasig und verfügt über einen Nullleiter als auch einen Schutzleiter. Der Netzanschluss 4 ist an einer Anschlussbox 8, in der alle elektrisch notwendigen Anschlüsse zum Anschuss des Ortsnetzes 6 an die Ladestation 2 vorhanden sind, angeschlossen.

Über die Anschlussbox 8 werden die drei Phasen L1, L2, L3 auf jeweils eine als Lastschutzschalter gebildete Sicherung 10a-c geleitet. Insbesondere sind die Sicherungen 10a-c für maximale Ströme von beispielsweise 16A ausgelegt. Die Sicherung 10a-c sind zwischen dem Netzanschluss 4 und einem Ladekabelanschluss 12 angeordnet.

Ausgangsseitig der Sicherung 10a-c sind insbesondere für jede Phase Fehlerstromschutzschalter 14a-c vorgesehen. Die Fehlerstromschutzschalter 14a-c überwachen einen Fehlerstrom in jeder Phase. Ausgangsseitig der Fehlerstromschutzschalter 14a-c ist eine Ladesteuerschaltung 16 sowie eine Messschaltung 18, welche der Übersichtlichkeitshalber nicht näher erläutert werden. Die Ladesteuerschaltung 16 oder die Messschaltung 18 verfügt über Kommunikationsmittel, um in Kommunikation mit einer Zentrale zu treten, insbesondere um auch ein nachfolgend genanntes Störsignal, insbesondere per Funk oder auch drahtgebunden an einer Zentrale zu übermitteln.

Ausgangsseitig der Messschaltung 18 ist eine Erkennungseinrichtung 20 vorgesehen und ausgangsseitig der Erkennungseinrichtung 20 ist der Ladekabelanschluss 12 mit den elektrischen Kontakten 12a-e, welche repräsentativ für die elektrischen Kontakte innerhalb einem Ladekabelanschluss 12 sind, angeordnet.

Die Ladestation 2 wird herkömmlich so betrieben, dass ein nicht gezeigtes Ladekabel mit seinem Stecker in den Ladekabelanschluss 12 eingesteckt wird. Über die Ladesteuerschaltung 16 und/oder die Messschaltung 18 erfolgt anschließend gegebenenfalls eine Kommunikation mit einem Elektrofahrzeug, in der die Ladebereitschaft des Elektrofahrzeugs signalisiert wird. Nach entsprechender Ladebereitschaft wird durch die Ladesteuerschaltung 16 der Ladestrom freigegeben, welcher in der vereinbarten Höhe und für die vereinbarte Zeit oder für eine vereinbarte Leistung oder dergleichen zwischen dem Netzanschluss 4 und dem Elektrofahrzeug fließt.

Zur Überwachung, ob ein Ladekabel in den Ladekabelanschluss 12 eingesteckt ist, kann eine Erkennungseinrichtung 20 als elektrische Erkennungseinrichtung und/oder eine Erkennungseinrichtung 22 als mechanische Erkennungseinrichtung betrieben werden.

Die elektrische Erkennungseinrichtung 20 überwacht den elektrischen Zustand der Kontakte 12a-e, insbesondere, ob hierauf beispielsweise ein Pilotsignal detektiert wird. Auch kann die Erkennungseinrichtung 20 einen Widerstand zwischen zumindest zwei der Kontakte 12a-c überwachen, wobei dieser Widerstand beispielsweise repräsentativ für ein Ladekabel ist, welches in den Ladekabelanschluss angesteckt ist.

Die Erkennungseinrichtung 22 kann beispielsweise ein optischer Schalter sein, der überwacht, ob das Ladekabel in dem Ladekabelanschluss 12 eingesteckt ist. Auch kann die Erkennungseinrichtung 22 ein Mikroschalter oder ein Näherungssensor sein, mit dem überwacht werden kann, ob der Stecker eines Ladekabels in dem Ladekabelanschluss 12 eingesteckt ist.

Die Erkennungseinrichtungen 20, 22 übermitteln einen Kontaktstatus an eine Auswerteschaltung 24. Ein Kontaktstatus kann entweder "Anschluss" (z.B. logisch 1) oder "Trennung" (z.B. logisch 0) sein. Mit dem Kontaktstatus "Anschluss" wird signalisiert, dass ein Ladekabel in den Ladekabelanschluss 12 gesteckt ist. Mit dem Kontaktstatus "Trennung" wird signalisiert, dass kein Ladekabel in dem Ladekabelanschluss 12 steckt. Ein Zustandsübergang von "Anschluss" auf "Trennung" kann dann erfolgen, wenn ein Ladekabel von dem Ladekabelanschluss 12 abgezogen wird. Auch eine solche Zustandsänderung kann an die Auswerteschaltung 24 übermittelt werden.

Darüber hinaus sind an den Lastschutzschaltern 10a-c sowie an den Fehlerstromschutzschaltern 14a-c jeweils Überwachungseinrichtungen 26, 28 vorgesehen. Die Überwachungseinrichtung 26, 28 können integrale Bestandteile der Sicherung 10a-c, 14a-c sein oder extern hiervon. Mit Hilfe der Überwachungseinrichtung 26, 28 kann überwacht werden, ob eine Sicherung geschlossen oder geöffnet ist. Ein solcher Schaltzustand kann beispielsweise "offen" oder "geschlossen" sein. Auch eine Änderung des Schaltzustands kann von den Überwachungseinrichtungen 26, 28 an die Auswerteeinrichtung 24 übermittelt werden.

Zusätzlich zu den Überwachungseinrichtungen 26, 28 kann integral in den Sicherungen 10a-c, 14a-c oder hiervon räumlich getrennt, jedoch in Wirkverbindung hiermit, jeweils eine Schalteinrichtung 30, 32 vorgesehen sein. Mit Hilfe der Schalteinrichtung 30, 32, welche beispielsweise ein motorischer Stellantrieb ist, kann jede einzelne der Sicherungen 10a-c, 14a-c mechanisch und elektrisch geschlossen werden. Die Schalteinrichtung 30, 32 können von der Auswerteschaltung 24 angesteuert werden und gegebenenfalls die geöffneten Sicherungen autonom schließen.

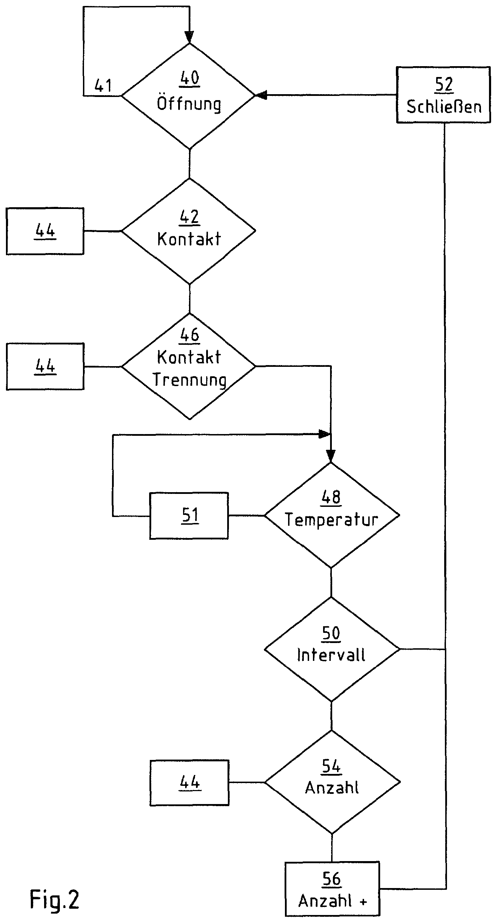

Die Ladestation 2 wird gegenständlich entsprechend einem Ausführungsbeispiel, wie in Fig. 2 beschrieben, betrieben.

Zunächst überwachen die Überwachungseinrichtungen 26, 28 laufend den Schaltstatus der Sicherungen 10a-c, 14a-c in Schritt 40. Sind die Sicherungen geschlossen, so verbleibt die Überwachung in der Überwachungsschleife 41.

Es kann dazu kommen, dass eine oder mehrere der Sicherungen 10a-c, 14a-c auslösen und deren Schaltstatus von "geschlossen" in "geöffnet" wechselt. In diesem Fall wird zu Schritt 42 abgezweigt, indem der Kontaktstatus an dem Ladekabelanschluss 12 mittels der Erkennungseinrichtungen 20, 22 überwacht wird. Ist der Kontaktstatus im Moment der Öffnung der Sicherung auf "Trennung", so wird in Schritt 44 ein Störsignal ausgegeben.

Ist auf der anderen Seite im Moment der Öffnung der Kontaktstatus auf "Anschluss", wird in Schritt 46 abgezweigt. Ändert sich der Kontaktstatus von "Anschluss" nicht in "Trennung" innerhalb eines sehr langen Zeitintervalls, beispielsweise mehr als 12 oder 24 Stunden, so wird ebenfalls ein Störsignal 44 abgesetzt. Andererseits wird, wenn in Schritt 46 eine Zustandsänderung des Kontaktzustands von "Anschluss" auf "Trennung" detektiert wird, in Schritt 48 abgezweigt. In diesem Fall ist festgestellt worden, dass ein Öffnen der Sicherung, wie in Schritt 40 festgestellt, während eines angeschlossenen Ladekabels aufgetreten ist und anschließend das Ladekabel abgezogen wurde. Dies kann bereits ausreichend sein, ein autonomes Schließen zu bewirken und ggf. in Schritt 52 zu verzweigen.

Die nachfolgend beschriebenen Schritte sind jeweils optional und alternativ oder kumulativ möglich. Darüber hinaus sind die nachfolgenden Schritte nicht zwingend in der beschriebenen Reihenfolge einzuhalten. Einzelne Schritte können auch zwischen den Schritten 40 bis 46 zum Einsatz kommen, ohne dass der Gedanke des Gegenstands verlassen wird.

In Schritt 48 wird die Temperatur der Ladestation 2 und/oder der Sicherungen 10a-c, 14a-c überwacht. Überschreitet die Temperatur einen Grenzwert, so wird in Schritt 51 über ein Zeitglied eine gewisse Zeit abgewartet und anschließend erneut die Temperatur in Schritt 48 geprüft. Es kann möglich sein, dass ausgehend von Schritt 48, wenn eine Grenzzeit überschritten ist, ebenfalls in ein Störsignal in Schritt 44 abgezweigt wird.

Wenn die Temperatur jedoch unter einen Grenzwert gefallen ist, wird ausgehend von dem Schritt 48 in den Schritt 50 abgezweigt.

In Schritt 50 wird überwacht, ob ein Zeitintervall seit einer letzten Öffnung einer Sicherung abgelaufen ist. Ein solches Zeitintervall kann beispielsweise 10 Minuten, 15 Minuten oder dergleichen sein. Ist das Intervall noch nicht abgelaufen, so war die letzte Öffnung erst vor einer kurzen Zeit und es kann sein, dass ein Nutzer mit einem defekten Kabel oder einem defekten Elektrofahrzeug einen erneuten Ladeversuch starten möchte.

Ist das Intervall abgelaufen, so wird in den Schritt 52 verzweigt, in dem die Auswerteschaltung 24 ein Stellimpuls an die Schalteinrichtungen 30, 32 abgibt. Die Schalteinrichtung 30, 32 werden vorzugsweise motorisch betrieben und schließen bei Empfang eines Stellimpulses alle Sicherungen 10a-c, 14a-c, unabhängig von ihrem aktuellen Schaltstatus.

Ist jedoch das Intervall noch nicht abgelaufen, so wird in den Schritt 54 abgezweigt, in dem ein Zähler überprüft wird, welcher die Anzahl an Fehlversuchen zählt. Ist die Zählvariable in dem Zähler über einen Grenzwert, so kann davon ausgegangen werden, dass der Nutzer mit einem defekten Kabel oder einem defekten Elektrofahrzeug eine Vielzahl an Versuchen durchgeführt hat. Ein Grenzwert kann beispielsweise 5 oder 10 sein. In diesem Fall kann ebenfalls ein Störsignal 44 ausgegeben werden. Auch ist es möglich, dass in diesem Fall über ein Zeitglied der Ablauf des Verfahrens für beispielsweise 1 Stunde, 2 Stunden oder 3 Stunden unterbrochen ist.

Ist der Zähler noch nicht an seinem Grenzwert, so wird in Schritt 56 der Zähler um eins erhöht. Außerdem ist es möglich, dass über ein einstellbares Zeitglied, abhängig von dem Wert der Zählvariablen, ein Zeitglied angesteuert ist. Je größer die Zählvariable, desto länger verzögert das Zeitglied den Ablauf des beschriebenen Verfahrensschritts 56. Nach Ablauf der Verzögerungszeit, welche abhängig von der Zählvariablen sein kann, kann von Schritt 56 in Schritt 52 verzweigt werden, in dem ein automatisches und autonomes Schließen der Sicherungen 10a-c, 14a-c mittels der Auswerteschaltung 24 und der Schalteinrichtung 30, 32 bewirkt wird.

Im Anschluss an das autonome Schließen, beginnt der Vorgang von neuem und es wird in Schritt 40 überwacht, ob die Sicherung 10a-c, 14a-c geschlossen sind oder deren Schaltstatus in geöffnet wechselt.

Mit Hilfe des gezeigten Verfahrens und der gezeigten Vorrichtung ist es möglich, die Verfügbarkeit von Ladestationen in besonders einfacher Weise zu erhöhen. Außerdem wird der Wartungsaufwand von Ladestationen verringert, da Fehlbedienungen der Ladestationen nicht zwingend zu einem Ausfall dieser führen.

### Bezugszeichenliste

- 2: Ladestation
- 2a: Gehäuse
- 4: Netzanschluss
- 6: Ortsnetz
- 8: Anschlussbox
- 10a-c: Sicherungs-/Lastschutzschalter
- 12: Ladekabelanschluss
- 14a-c: Sicherungs-/Fehlstromschutzschalter
- 16: Ladesteuerschaltung
- 18: Messschaltung
- 20, 22: Erkennungseinrichtung
- 24: Auswerteschaltung
- 26, 28: Überwachungseinrichtung
- 30, 32: Schalteinrichtung
- 40: Schaltzustandsüberwachung
- 41: Überwachungsschleife
- 42: Kontaktzustandsüberwachung
- 44: Störsignal
- 46: Überwachungszustandsänderung
- 48: Temperaturüberwachung
- 50: Intervallüberwachung
- 51: Überwachungsschleife
- 52: autonomes Schließen
- 54: Anzahl Überwachen
- 56: Anzahl Inkrementieren

## Patentansprüche

1. Verfahren zum Betreiben einer Ladestation (2) für Elektrofahrzeuge bei dem
- ein Schaltzustand zumindest einer zwischen einem Netzanschluss (4) der Ladestation (2) und einem Ladekabelanschluss (12) der Ladestation angeordneten Sicherung (14a-c) überwacht wird und
- mit Hilfe eines Kontaktzustands ein Anschluss eines Ladekabels an dem Ladekabelanschluss (12) und eine Trennung des Ladekabels von dem Ladekabelanschluss (12) überwacht wird,
**dadurch gekennzeichnet,**
- **dass** eine während eines Anschlusses des Ladekabels an dem Ladekabelanschluss (12) auftretenden Öffnung der Sicherung (14a-c) mit Hilfe des überwachten Schaltzustands detektiert wird, und
- **dass** bei einer so detektierten Öffnung bedingt durch einer detektierten Trennung des Ladekabels von dem Ladekabelanschluss (12) die Sicherung (14a-c) autonom geschlossen wird,
- wobei die Sicherung (14a-c) nicht autonom geschlossen wird, wenn während das Ladekabel nicht an dem Ladekabelanschluss (12) angeschlossen ist, eine Öffnung der Sicherung (14a-c) detektiert wird.

2. Verfahren nach Anspruch 1,
**dadurch gekennzeichnet,**
- **dass** der Kontaktzustand über ein Pilotsignal an einem elektrischen Anschluss des Kabels überwacht wird und/oder dass der Kontaktzustand durch ein Messung eines in dem Kabel angeordneten ohmschen Widerstand überwacht wird.

3. Verfahren nach Anspruch 1 oder 2,
**dadurch gekennzeichnet,**
- **dass** die Sicherung (14a-c) zumindest einen Lastschalter und/oder eine Fehlstromschalter umfasst.

4. Verfahren nach einem der vorangehenden Ansprüche,
**dadurch gekennzeichnet,**
- **dass** bei einer zuvor detektierten Öffnung eine Temperatur in oder an der Sicherung (14a-c) erfasst wird.

5. Verfahren nach Anspruch 4,
**dadurch gekennzeichnet,**
- **dass** bei einem Überschreiten einer maximalen Temperatur das autonome Schließen unterbunden wird und/oder eine bestimmte Zeit bis zu einem autonomen Schließen abgewartet wird und/oder dass eine Ladeleistung für einen Ladevorgang nach dem autonomen Schließen gegenüber einer Regelladeleistung reduziert wird.

6. Verfahren nach einem der vorangehenden Ansprüche,
**dadurch gekennzeichnet,**
- **dass** die Sicherung (14a-c) unabhängig von einer Kommunikation mit einer räumlich entfernt angeordneten Zentrale autonom in der Ladestation (2) geschlossen wird.

7. Verfahren nach einem der vorangehenden Ansprüche,
**dadurch gekennzeichnet,**
- **dass** die Sicherung (14a-c) mit Hilfe eines motorischen Stellantriebs geschlossen wird.

8. Verfahren nach einem der vorangehenden Ansprüche,
**dadurch gekennzeichnet,**
- **dass** der Netzanschluss (4) mehrphasig ist und bei einer detektierten Öffnung einer Sicherung (14a-c) auf einer der Phasen nach der detektierten Trennung des Ladekabels von dem Ladekabelanschluss (12) die Sicherungen (14a-c) aller Phasen autonom geschlossen werden.

9. Verfahren nach einem der vorangehenden Ansprüche,
**dadurch gekennzeichnet,**
- **dass** nach einem autonomen Schließen der Sicherung (14a-c) deren Schaltzustand überwacht wird und dass bei einer Öffnung der Sicherung (14a-c) ohne einen detektierten Anschluss des Ladekabels an dem Ladekabelanschluss ein Störungssignal an eine räumlich entfernte Zentrale abgesetzt wird.

10. Verfahren nach einem der vorangehenden Ansprüche,
**dadurch gekennzeichnet,**
- **dass** ein Zeitraum zwischen einer detektierten Trennung des Ladekabels von dem Ladekabelanschluss (12) und dem autonomen Schließen der Sicherung (14a-c) bestimmt wird.

11. Verfahren nach einem der vorangehenden Ansprüche,
**dadurch gekennzeichnet,**
- **dass** eine Anzahl an detektierten Öffnungen innerhalb eines Intervalls bestimmt wird und dass bei einem Überschreiten einer maximalen Anzahl das autonome Schließen unterbunden wird.

12. Ladestation (2) für Elektrofahrzeuge umfassend,
- einen Netzanschluss (4),
- einen Ladekabelanschluss (12),
- eine zwischen dem Netzanschluss (4) und dem Ladekabelanschluss (12) angeordnete Sicherung (14a-c),
- eine Überwachungseinrichtung (26, 28) eingerichtet zur Überwachung eines Schaltzustands zumindest der Sicherung (14a-c) und
- eine Erkennungseinrichtung (20, 22) eingerichtet zur Erkennung eines Kontaktzustands eines Ladekabels an dem Ladekabelanschluss (12),
**dadurch gekennzeichnet,**
- **dass** eine Auswerteeinrichtung (24) zur Detektion einer während eines Anschlusses des Ladekabels an dem Ladekabelanschluss (12) auftretenden Öffnung der Sicherung (14a-c) mit Hilfe des überwachten Schaltzustands eingerichtet ist, und
- **dass** eine Schalteinrichtung (30, 32) zum autonomen Schließen der Sicherung (14a-c) bei einer von der Auswerteeinrichtung detektierten Öffnung der Sicherung (14a-c) bedingt durch eine detektierte Trennung des Ladekabels von dem Ladekabelanschluss (12) eingerichtet ist und
- **dass** die Schalteinrichtung (30, 32) zum nicht autonomen Schließen der Sicherung (14a-c) bei einer von der Auswerteeinrichtung detektierten Öffnung der Sicherung (14a-c), während das Ladekabel nicht an dem Ladekabelanschluss angeschlossen ist, eingerichtet ist.

13. Ladestation nach Anspruch 12,
**dadurch gekennzeichnet,**
- **dass** die Sicherung (14a-c) zur Detektion eines elektrischen Fehlers zumindest an dem Ladekabelanschlusses (12) und zum Schalten einer elektrischen Verbindung zwischen dem Netzanschluss (4) und dem Ladekabelanschluss (12) eingerichtet ist.

## Claims

1. Method for operating a charging station (2) for electric vehicles, wherein
- a switching state of at least one fuse (14a-c) arranged between a grid connection (4) of the charging station (2) and a charging cable connection (12) of the charging station (2) is monitored and
- with the aid of a contact state, a connection of a charging cable with the charging cable connection (12) and a separation of the charging cable from the charging cable connection (12) is monitored,
**characterised in that**
- an opening of the fuse (14a-c) occurring during a connection of the charging cable with the charging cable connection (12) is detected with the aid of the monitored switching state and
- in the case of a detected opening, the fuse (14a-c) is autonomously closed caused by the detected separation of the charging cable from the charging cable connection (12), wherein
- the fuse (14a-c) is not autonomously closed in case an opening of the fuse (14a-c) is detected while the charging cable is not connected to the charging cable connection (12).

2. Method according to Claim 1,
**characterised in that**
- the contact state is monitored via a pilot signal on an electric connection of the cable and/or the contact state is monitored by a measurement of an ohmic resistor arranged in the cable.

3. Method according to Claim 1 or 2,
**characterised in that**
- the fuse (14a-c) comprises at least one load switch and/or a fault current switch.

4. Method according to any one of the preceding claims,
**characterised in that**
- in the case of a previously detected opening, a temperature is recorded in or at the fuse (14a-c).

5. Method according to claim 4,
**characterised in that**
- when a maximum temperature is exceeded, the autonomous closure is prevented and/or a certain time is waited until autonomous closure and/or a charging capacity for a charging operation is reduced with respect to a standard charging capacity after the autonomous closure.

6. Method according to any one of the preceding claims,
**characterised in that**
- the fuse (14a-c) is closed autonomously in the charging station (2) irrespective of a communication with a control centre arranged spatially remote.

7. Method according to any one of the preceding claims,
**characterised in that**
- the fuse (14a-c) is closed with the aid of a motorised actuator.

8. Method according to any one of the preceding claims,
**characterised in that**
- the grid connection (4) is multi-phase and in the case of a detected opening of a fuse (14a-c) on one of the phases following the detected separation of the charging cable from the charging cable connection (12), the fuses (14a-c) of all phases are autonomously closed.

9. Method according to any one of the preceding claims,
**characterised in that**
- following autonomous closure of the fuse (14a-c), its switching state is monitored and in the case of an opening of the fuse (14a-c) without a detected connection of the charging cable to the charging cable connection, an interruption signal is transmitted to a spatially remote control centre.

10. Method according to any one of the preceding claims,
**characterised in that**
- a time period between a detected separation of the charging cable from the charging cable connection (12) and the autonomous closure of the fuse (14a-c) is determined.

11. Method according to any one of the preceding claims,
**characterised in that**
- a number of detected openings is determined within an interval and when a maximum number is exceeded, the autonomous closure is prevented.

12. Charging station (2) for electric vehicles comprising
- a grid connection (4),
- a charging cable connection (12),
- a fuse (14a-c) arranged between the grid connection (4) and the a charging cable connection (12),
- a monitoring device (26, 28) configured to monitor a switching state of at least the fuse (14a-c) and
- a detection device (20, 22) configured to detect a contact state of a charging cable at the charging cable connection (12),
**characterised in that**
- an evaluation device (24) is configured to detect an opening of the fuse (14a-c) occurring during a connection of the charging cable to the charging cable connection (12) with the aid of the monitored switching state and
- a switching device (30-32) is configured to autonomously close the fuse (14a-c) caused by a detected separation of the charging cable from the charging cable connection (12) in the case of an opening of the fuse detected by the evaluation device and
- the switching device (30-32) is configured to not autonomously close the fuse (14a-c) in the case of an opening of the fuse detected by the evaluation device while the charging cable is not connected to the charging cable connection (12).

13. Charging station according to Claim 12,
**characterised in that**
- the fuse (14a-c) is configured to detect an electrical fault at least at the charging cable connection (12) and to switch an electrical connection between the grid connection (4) and the charging cable connection (12).

## Revendications

1. Procédé pour faire fonctionner une station de charge (2) pour véhicules automobiles électriques, dans lequel
- un état de commutation d'au moins un dispositif de sécurité (14a - c) disposé entre un raccordement au réseau (4) de la station de charge (2) est surveillé et
- un raccordement d'un câble de charge au raccordement de câble de charge (12) et une séparation du câble de charge du raccordement de câble de charge (12) sont surveillés au moyen d'un état de contact,
**caractérisé en ce qu'**
- une ouverture du dispositif de sécurité (14a - c) se produisant pendant un raccordement de câble de charge au raccordement de câble de charge (12) est détectée au moyen de l'état de commutation surveillé, et que,
- lors de la détection d'une telle ouverture, due à une séparation du câble de charge du raccordement de câble de charge (12) ainsi détectée, le dispositif de sécurité (14a - c) est fermé de manière autonome,
- sachant que le dispositif de sécurité (14a - c) n'est pas fermé de manière autonome quand une ouverture du dispositif de sécurité (14a - c) est détectée pendant que le câble de charge n'est pas relié au raccordement de câble de charge (12).

2. Procédé selon la revendication 1,
**caractérisé en ce que**
l'état de contact est surveillé au moyen d'un signal pilote sur un raccordement du câble et / ou que l'état de contact est surveillé au moyen d'une mesure d'une résistance ohmique, présente dans le câble.

3. Procédé selon la revendication 1 ou 2, **caractérisé en ce que**
le dispositif de sécurité (14a - c) comprend au moins un commutateur de charge et / ou un commutateur de courant de défaut.

4. Procédé selon l'une des revendications précédentes, **caractérisé en ce que**,
lors d'une ouverture précédemment détectée, une température est captée dans ou sur le dispositif de sécurité (14a - c) .

5. Procédé selon la revendication 4,
**caractérisé en ce que**,
lors du surpassement d'une température maximale, la fermeture automatique est empêchée et / ou qu'un laps de temps s'écoule avant une fermeture autonome et / ou qu'une puissance de charge pour un processus de charge est réduite par rapport à la puissance de charge réglementaire après la fermeture autonome.

6. Procédé selon l'une des revendications précédentes, **caractérisé en ce que**
le dispositif de sécurité (14a - c) est fermé de manière autonome dans la station de charge (2) indépendamment d'une communication avec une centrale éloignée localement.

7. Procédé selon l'une des revendications précédentes, **caractérisé en ce que**
le dispositif de sécurité (14a - c) est fermé au moyen d'un entraînement de réglage motorisé.

8. Procédé selon l'une des revendications précédentes, **caractérisé en ce que**
le raccordement au réseau (4) est multiphasé et que, lors de la détection d'une ouverture d'un dispositif de sécurité (14a - c) sur l'une des phases, les dispositifs de sécurité (14a - c) sont fermés après la détection d'une séparation du câble de charge du raccordement de câble de charge (12).

9. Procédé selon l'une des revendications précédentes, **caractérisé en ce que**,
après une fermeture autonome du dispositif de sécurité (14a - c), l'état de commutation de celui-ci est surveillé
et que, lors d'une ouverture du dispositif de sécurité (14a - c) sans détection d'un raccordement du câble de charge au raccordement de câble de charge, un signal de perturbation est lancé à une centrale localement éloignée.

10. Procédé selon l'une des revendications précédentes, **caractérisé en ce qu'**
un intervalle entre la détection d'une séparation du câble de charge du raccordement de câble de charge et la fermeture autonome du dispositif de sécurité (14a - c) est déterminé.

11. Procédé selon l'une des revendications précédentes, **caractérisé en ce qu'**
un nombre d'ouvertures détectées dans un intervalle est déterminé et que, lors du surpassement d'un nombre maximum, la fermeture autonome est empêchée.

12. Station de charge (2) pour véhicules automobiles électriques, comprenant :
- un raccordement au réseau (4),
- un raccordement de câble de charge (12),
- un dispositif de sécurité (14a - c), disposé entre le raccordement au réseau (4),
- un dispositif de surveillance (26, 28) qui est conçu pour surveiller un état de commutation d'au moins un dispositif de sécurité (14a - c), et
- un dispositif de détection (20, 22) pour la détection d'un état de contact entre le câble de charge et le raccordement de câble de charge (12),
**caractérisée en ce que**
- un dispositif d'évaluation (24) est conçu pour détecter à l'aide de l'état de commutation surveillé une ouverture du dispositif de sécurité (14a - c) se produisant pendant un raccordement du câble de charge au raccordement de câble de charge (12),
- un dispositif de commutation (30, 32) est conçu pour la fermeture autonome du dispositif de sécurité (14a - c) lors de la détection par le dispositif d'évaluation d'une ouverture du dispositif de sécurité (14a - c) due à une séparation détectée du câble de charge du raccordement de câble de charge (12), et
- le dispositif de commutation (30, 32) est conçu pour la fermeture non autonome du dispositif de sécurité (14a - c) lors de la détection par le dispositif d'évaluation d'une ouverture du dispositif de sécurité (14a
- c) pendant que le câble de charge n'est pas raccordé au raccordement de câble de charge (12).

13. Station de charge selon la revendication 12, **caractérisée en ce que**
le dispositif de sécurité (14a - c) est conçu pour la détection d'un défaut électrique au moins sur le raccordement de câble de charge (12) et pour la commutation d'une connexion électrique entre le raccordement au réseau (4) et le raccordement de câble de charge (12).
